# EUROPEAN PATENT SPECIFICATION

(11) **EP 2 889 494 B1**
(45) Date of publication and mention of the grant of the patent: **31.05.2017**
(21) Application number: 13382558.8
(22) Date of filing: 26.12.2013
(51) Int. Cl.: F16B 7/14

(54) **Collapsible strut construction**
Zusammenklappbare Strebenkonstruktion
Construction d'étais rétractiles

(43) Date of publication of application: 01.07.2015
(73) Proprietor: CESA, Compania Espanola de Sistemas Aeronauticos, S.A., 28906 Getafe (ES)
(72) Inventor: Morante López, Esteban, 28906 Getafe (ES); Chamorro González-Tablas, Eduardo, 28906 Getafe (ES)
(74) Representative: Elzaburu S.L.P.

(56) References cited:
- WO-A1-2008/035845
- US-A- 5 950 997

## Description

### FIELD OF THE INVENTION

The present invention refers to a collapsible strut construction, manually movable between an extended, locked position and a retracted, unlocked position.

### BACKGROUND OF THE INVENTION

A plurality of collapsible strut constructions have been employed over past years for supporting aircraft cowlings in an open position as, for example, during maintenance operations of the engines.

As aircraft cowlings tend to be hefty, especially those covering large aircraft engines, and their weight can amount to hundreds of kilos, an inadvertent unlocking of the collapsible strut construction in its extended, locked position results in a rapid, unpredictable closure of the aircraft cowling that may result in serious injury or even death of an operator performing maintenance operations of the engine beneath the aircraft cowling.

Different solutions aimed at preventing an inadvertent unlocking of the collapsible strut construction in its extended, locked position comprise unlocking sequences that may be manually performed when the collapsible strut construction is under load in its extended, locked position.

Simple unlocking sequences typically consist of an axial relative movement between the strut members. The problem with these collapsible strut constructions is that they are subject to inadvertent unlocking upon bumping or jarring of the strut members or of the aircraft cowling.

More complex unlocking sequences are safer against inadvertent unlocking of the collapsible strut construction. The problem with these collapsible strut constructions is that, since locking in the extended, locked position of the collapsible strut constructions implies performing these unlocking sequences in reverse order, they are tougher to correctly lock, which can result in an unnoticed incorrect locking of the collapsible strut construction in the extended, locked position.

It is also known document US5950997 disclosing a strut construction for holding aircraft cowlings in a raised position, comprising first and second telescoping members which are relatively shiftable between a collapsed inoperative strut position wherein the members are nested together, and an almost fully extended operative load-bearing position wherein the members are only partially nested, the relative shifting of said telescoping members to their partially extended operative position causing a blocking of any collapsing movement. The strut has a spring-charged collar which is slidable on one telescoping member between blocking and unblocking positions, and the collar has a latch which is responsive to its manual shifting to its unblocking position against the spring-action thereof, for holding the collar in an unblocking position. Such shifting unblocks the telescoping members, thereby to enable them to be relatively shifted to their collapsed position only after the cowling has first been raised to the full extent of its movement.

### SUMMARY OF THE INVENTION

It is therefore an object of the present invention to provide a collapsible strut construction that requires an ordered unlocking sequence to ensure voluntary unlocking of the collapsible strut construction under load in the extended, locked position, whilst requiring an axial relative movement between the strut members to lock the collapsible strut construction in the extended, locked position.

This object is achieved with a collapsible strut construction, manually movable between an extended, locked position and a retracted, unlocked position, with at least an outer tubular strut, an inner tubular strut slidable within the outer tubular strut and a pull-rotation mechanism configured to lock and unlock under load the outer tubular strut and the inner tubular strut together in the extended position.

The pull-rotation mechanism has at least a plurality of locking dogs, a locking groove configured to house the plurality of locking dogs in the extended, locked position, elastic means and a locking collar slidable and rotatable within the outer tubular strut and around the inner tubular strut, having the locking collar a crenel end with a plurality of cutouts.

Locking of the collapsible strut construction in its extended, locked position is performed by means of an axial relative movement between the outer tubular strut and the inner tubular strut as the locking collar and the elastic means are configured to cooperatively bias the plurality of locking dogs into the locking groove.

Unlocking of the collapsible strut construction in its extended, locked position is performed by compressing the elastic means and aligning the cutouts of the crenel end with each one of the locking dogs. In other words, the elastic means are compressed and the cutouts of the crenel end are aligned with each one of the locking dogs in the extended, unlocked position.

### DESCRIPTION OF THE DRAWINGS

FIG. 1 shows a collapsible strut construction in the extended, locked position according to a preferred embodiment of the invention.
FIG. 2 shows a collapsible strut construction in the retracted, unlocked position according to a preferred embodiment of the invention.
FIG. 3 is a sectional longitudinal view of the collapsible strut construction depicted in FIG. 1.
FIG. 4 is a sectional longitudinal view of the collapsible strut depicted in FIG. 2.
FIG. 5 is a section taken on line A-A of FIG. 3.
FIG. 6 is a section taken on line B-B of FIG. 4.

### DETAILED DESCRIPTION OF THE INVENTION

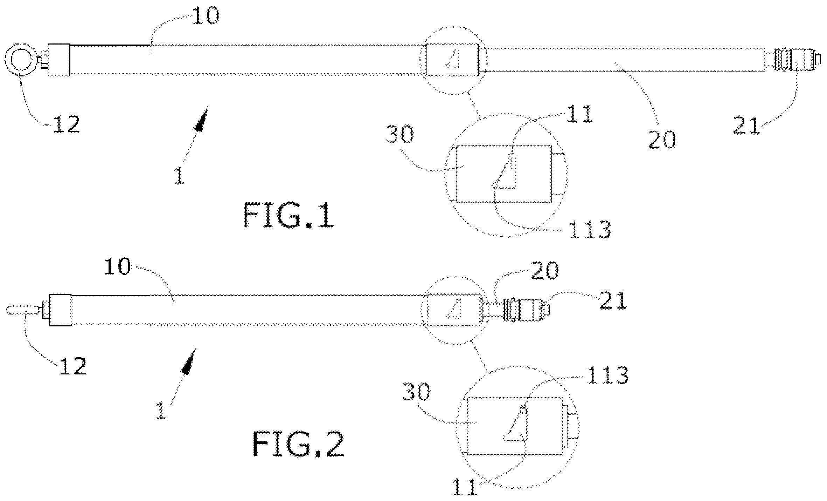

An embodiment of the present invention for a collapsible strut construction 1, manually movable under load from an extended, locked position (see figure 1) to a retracted, unlocked position (see figure 2) will be described hereinafter.

Figure 1 shows the collapsible strut construction 1 in the extended, locked position wherein an outer tubular strut 10 and an inner tubular strut 20 are fully extended and locked at their proximal ends by means of a pull-rotation mechanism.

The distal end of the outer tubular strut 10 comprises a fastener 12 that rotatably couples the outer tubular strut 10 to a pivot fitting within a housing of underlying equipment, such as an engine, and the distal end of the inner tubular strut 20 comprises a detachable fastener 21 that may be detachably attached to one of a fitting of a cowling (not represented) for supporting the cowling in an open position and a stowage fitting (not represented) within the housing of the underlying equipment for stowing the collapsible strut construction 1.

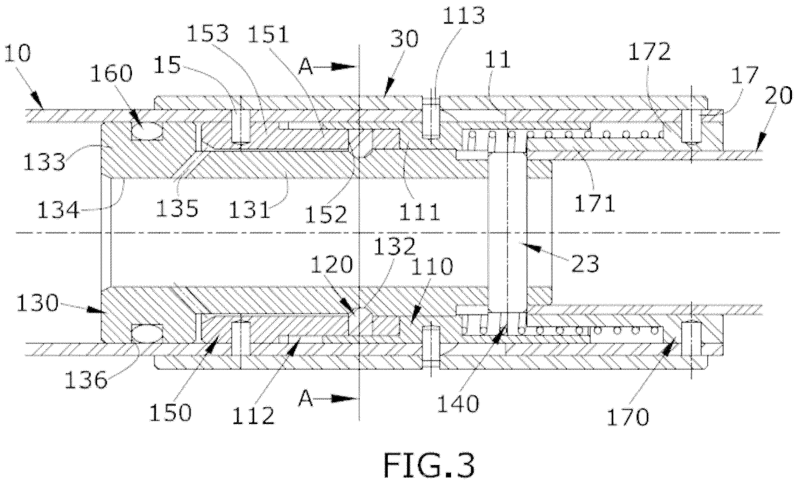

An embodiment of the pull-rotation mechanism will henceforth be described with reference to figures 3 through 6. Herein, the pull-rotation mechanism comprises a locking collar 110, slidable and rotatable within the outer tubular strut 10 and around the inner tubular strut 20; a plurality of locking dogs 120; a piston 130, fastened to the inner tubular strut 20 and slidable within the outer tubular strut 10; elastic means 140; a tubular cage 150, fastened to the outer tubular strut 10; a friction abutment 160 (see figure 3), configured to scrape the inner surface of the outer tubular strut 10; and a tubular end fitting 170, fastened to the outer tubular strut 10 and slidable around the inner tubular strut 20.

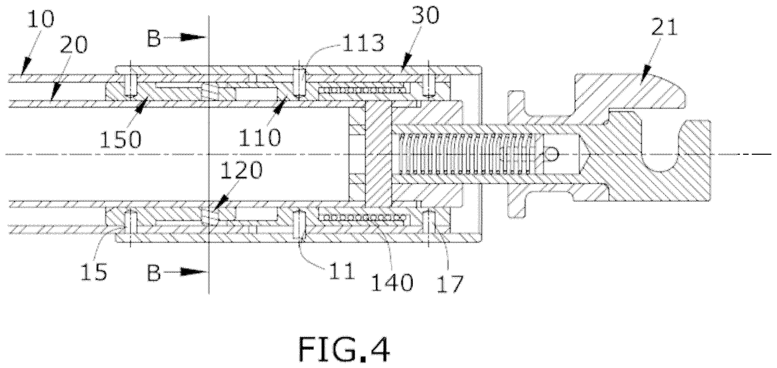

A possible embodiment of the elastic means 140 has been represented in figures 3 and 4. Therein it can be appreciated that the elastic means 140 are a compression spring.

The locking collar 110 has an inner protrusion 111 configured to rest on the distal end of the elastic means 140, and a crenel end 112 with a plurality of protrusions and a plurality of cutouts.

The elastic means 140 surround a head portion 171 of reduced outer diameter of the tubular end fitting 170, which is fastened to the proximal end of the outer tubular strut 10 at an end abutment 172 by fastening means 17, such that the head portion 171 is positioned farther within the outer tubular strut 10 than the end abutment 172.

Optionally, the proximal end of the elastic means 140 may be coupled to the end abutment 172 of the tubular end fitting 170.

The locking collar 110 and the elastic means 140 are configured to cooperatively bias the plurality of locking dogs 120 into a locking groove 132 configured to house the plurality of locking dogs 120 in the locked position.

The locking groove 132 is comprised in a head portion 131 of reduced outer diameter of the piston 130, which is fastened to the proximal end of the inner tubular strut 20 at an end abutment 133 by fastening means 23, such that the end abutment 133 is positioned farther within the outer tubular strut 10 than the head portion 131. The head portion 131 is slidable within the tubular cage 150, whereas the end abutment 133 is slidable within the outer tubular strut 10.

A possible embodiment of the fastening means 23 has been represented in figure 3. Therein it can be appreciated that the outer diameter of the end portion of the head portion 131 has been reduced to form an abutted junction with the proximal end of the inner tubular strut 20. Furthermore, the abutted junction is secured by a pin.

Optionally, the piston 130 may comprise a longitudinal bore 134 that results in a considerable weight reduction of the pull-rotation mechanism 100.

Another optional possibility is that the piston 130 comprises an anti-void cavity 135 (see figure 3) that prevents a vacuum from being established between the piston 130 and one of the outer tubular strut 10 and the tubular cage 150.

Each one of the plurality of locking dogs 120 are guided into and out of the locking groove 132 by means of one of a plurality of guiding slots 152 comprised in the tubular cage 150.

In this embodiment of the pull-rotation mechanism, the plurality of guiding slots 152 are comprised in a head portion 151 of reduced outer diameter of the tubular cage 150, which is fastened proximate to the proximal end of the outer tubular strut 10 at an end abutment 153 by fastening means 15, such that the end abutment 153 is positioned farther within the outer tubular strut 10 than the head portion 151. The crenel end 112 of the locking collar 110 is slidable around the head portion 151 of the tubular cage 150.

When the detachable fastener 21 is detached from the stowage fitting of the housing of the underlying equipment, the inner tubular strut 20 is free to slide within the outer tubular strut 10 as the pull-rotation mechanism 100 is unlocked in this position.

In order to prevent this free sliding of the inner tubular strut 20 within the outer tubular strut 10, the end abutment 133 of the piston 130 comprises a friction groove 136 housing the friction abutment 160, which is configured to scrape the inner surface of the outer tubular strut 10.

In this embodiment, the collapsible strut construction 1 comprises an unlocking collar 30 slidable and rotatable around the outer tubular strut 10 and coupled to the pull-rotation mechanism 100 by means of a plurality of pins 113 comprised in the locking collar 110, the pins 113 projecting outwards of the locking collar 110 and each pin 113 traversing one of a plurality of recesses comprised in the outer tubular member 10.

The plurality of recesses comprised in the outer tubular member 10 are in this embodiment fluke-shaped slots 11 (see figures 1 and 2). Each one of the plurality of fluke-shaped slots 11 are configured to guide one of the plurality of pins 113 from the extended, locked position to the extended, unlocked position and vice versa.

When the cowling is opened for service or maintenance operations, the collapsible strut construction 1 is stowed within the housing of the underlying equipment in its retracted, unlocked position (see figure 2) and the detachable fastener 21 is attached to the stowage fitting (not represented). This retracted, unlocked position reduces the load transfer between the fastener 12 and the detachable fastener 21 whilst the collapsible strut construction 1 is stowed as the pull-rotation mechanism is unlocked. Furthermore, this retracted, unlocked position reduces the modification of the cowling's stiffness.

As can be appreciated in figure 4, in the retracted, unlocked position the elastic means 140 are compressed between the inner protrusion 111 of the locking collar 110 and the end abutment 172 of the tubular end fitting 170. The elastic means 140 cannot return to their resting position as the locking dogs 120 block the movement of the locking collar 110, which in turn blocks the extension of the elastic means 140.

In order to secure the cowling in its open position, first the detachable fastener 21 is detached from the stowage fitting of the housing and then the inner tubular strut 20 is pulled out from the outer tubular strut 10. Throughout the extension of the inner tubular strut 20, the locking dogs 120 slide around the inner tubular strut 10 whilst blocking the extension of the elastic means 140.

When the inner tubular strut 20 reaches the extended position, the locking dogs 120 meet the locking groove 132, hence unblocking the movement of the locking collar 110, which in turn unblocks the extension of the elastic means 140.

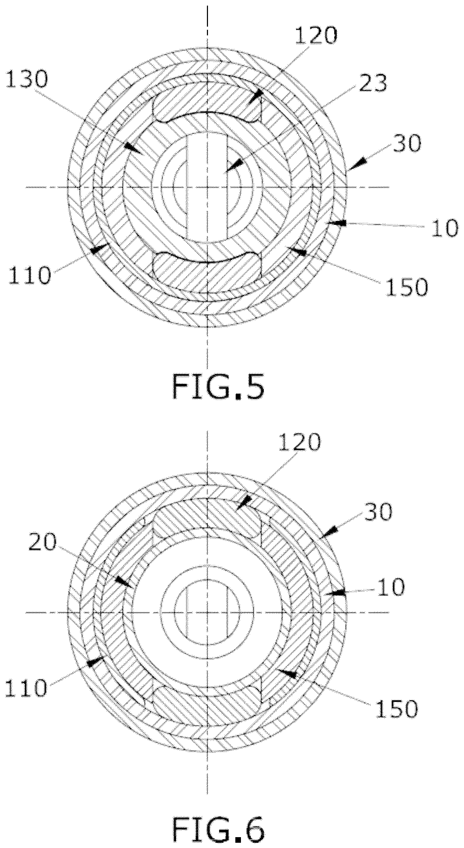

Upon extension of the elastic means 140, the locking collar 110 advances farther within the outer tubular strut 10, abutting the locking dogs 120 in engagement with the locking groove 132 as represented in figures 3 and 5.

This advancement of the locking collar 110 also comprises a rotating movement as the pins 113 are guided by the fluke-shaped slots 11 in a diagonal direction. This causes in turn the alignment of the plurality of protrusions of the crenel end 112 with each one of the plurality of locking dogs 120.

Now the pull-rotation mechanism is locked (see figures 3 and 5), hence the outer tubular strut 10 and the inner tubular strut 20 are locked together in the extended position (see figure 1).

At this point, the detachable fastener 21 is attached to the fitting of the cowling to secure the cowling in the open position. With the collapsible strut construction 1 extended, locked and attached to the cowling, any operation on the underlying equipment may be carried out safely.

Another possibility for securing the cowling in its open position is to attach the detachable fastener 21 to the fitting of the cowling before pulling out the inner tubular strut 20 from the outer tubular strut 10.

Once the operations on the underlying equipment have been accomplished, unlocking of the collapsible strut construction 1 may be performed under load to close the cowling.

In this embodiment, this unlocking operation is performed by means of pulling and rotating the unlocking collar 30 as will be explained henceforth.

First, the unlocking collar 30 is pulled from the outer tubular strut 10 towards the inner tubular strut 20. In other words, the unlocking collar 30 is pulled towards the proximal end of the outer tubular strut 10.

The plurality of pins 113 slide against the longitudinal portion of the fluke-shaped grooves 11 upon pulling of the unlocking collar 30, which in turn guides the unlocking collar 30 whilst sliding around the outer tubular strut 10.

As the unlocking collar 30 is coupled to the locking collar 110 of the pull-rotation mechanism by means of the pins 113, pulling of the unlocking collar 30 results in the advancement of the locking collar 110 towards the proximal end of the outer tubular strut 10, which in turn compresses the elastic means 140 between the inner protrusion 111 of the locking collar 110 and the end abutment 172 of the tubular end fitting 170.

In this embodiment, the advancement of the unlocking collar 30 is limited by both the rim of the head portion 171 of the tubular end fitting 170 that abuts the inner protrusion 111 of the locking collar 110 and the base portion of the fluke-shaped grooves 11 that abut each one of the pins 113.

The collapsible strut construction 1 has not yet been unlocked as the plurality of protrusions of the crenel end 112 of the locking collar 110 are aligned with each one of the plurality of locking dogs 120. In this position, the plurality of protrusions of the crenel end 112 abut one of the plurality of locking dogs 120 in engagement with the locking groove 132.

Next, the unlocking collar 30 is rotated around the outer tubular strut 10 until the position of engagement of the locking dogs 120 with the locking groove 132 is shifted to a position of release of the locking dogs 120 from the locking groove 132.

The plurality of pins 113 slide against the base portion of the fluke-shaped grooves 11 upon rotation of the unlocking collar 30, which in turns guides the unlocking collar 30 whilst rotating around the outer tubular strut 10.

As the unlocking collar 30 is coupled to the locking collar 110 of the pull-rotation mechanism by means of the pins 113, rotation of the unlocking collar 30 results in rotation of the locking collar 110.

In this embodiment, rotation of the unlocking collar 30 is limited by the tail portion of the fluke-shaped grooves 11 that abut each one of the pins 113.

Once the unlocking collar 30 has been fully rotated, the locking dogs 120 become aligned with each one of the plurality of protrusions 114 of the crenel end 112 of the locking collar 110. In this position, the locking dogs 120 are not abutted against the locking groove 132 so the pull-rotation mechanism becomes unlocked and abridgement of the collapsible strut construction 1 is possible.

Upon unlocking of the pull-rotation mechanism 100, the inner tubular strut 20 may be pushed within the outer tubular strut 10. Throughout the abridgement of the inner tubular strut 20, the locking dogs 120 slide around the inner tubular strut 10 whilst blocking the extension of the elastic means 140.

When the inner tubular strut 20 reaches the retracted position, the detachable fastener 21 is detached from the fitting of the cowling and secured to the stowage fitting of the housing, thus allowing closure of the cowling.

## Claims

1. Collapsible strut construction (1), manually movable between an extended, locked position and a retracted, unlocked position, comprising:
an outer tubular strut (10);
an inner tubular strut (20) slidable within the outer tubular strut (10); and
a pull-rotation mechanism configured to lock and unlock under load the outer tubular strut (10) and the inner tubular strut (20) together in the extended position, the pull-rotation mechanism further comprising a plurality of locking dogs (120), a locking groove (132) configured to house the plurality of locking dogs (120) in the extended, locked position, and elastic means (140);
the pull-rotation mechanism further comprising a locking collar (110) slidable and rotatable within the outer tubular strut (10) and around the inner tubular strut (20);
the locking collar (110) and the elastic means (140) being configured to cooperatively bias the plurality of locking dogs (120) into the locking groove (132);
**characterised in that**
the locking collar (110) further comprises a crenel end (112) having a plurality of cutouts; and
the elastic means (140) are compressed and the cutouts of the crenel end (112) are aligned with each one of the locking dogs (120) in the extended, unlocked position.

2. Collapsible strut construction (1), according to any one of the preceding claims, further comprising an unlocking collar (30) slidable and rotatable around the outer tubular strut (10) and coupled to the pull-rotation mechanism by means of a plurality of pins (113) comprised in the locking collar (110), the pins (113) projecting outwards of the locking collar (110) and each pin (113) traversing one of a plurality of recesses comprised in the outer tubular member (10).

3. Collapsible strut construction (1), according to claim 2, wherein the plurality of recesses comprised in the outer tubular member (10) are fluke-shaped slots (11), and wherein each one of the plurality of fluke-shaped slots (11) are configured to guide one of the plurality of pins (113) from the extended, locked position to the extended, unlocked position and vice versa.

4. Collapsible strut construction (1), according to any one of the preceding claims, wherein the pull-rotation mechanism further comprises a tubular cage (150) fastened to the outer tubular strut (10) by fastening means (15), the tubular cage (150) further comprising a plurality of guiding slots (152), wherein each one of the plurality of guiding slots (152) are configured to guide one of the plurality of locking dogs (120) into and out of the locking groove (132).

5. Collapsible strut construction (1), according to claim 4, wherein the tubular cage (150) further comprises a head portion (151) of reduced outer diameter and an end abutment (153) fastened to the outer tubular strut (10) by fastening means (15), such that the end abutment (153) is positioned farther within the outer tubular strut (10) than the head portion (151); the plurality of guiding slots (152) are located in the head portion (151); and wherein the crenel end (112) of the locking collar (110) is slidable around the head portion (151) of the tubular cage (150).

6. Collapsible strut construction (1), according to any one of the preceding claims, wherein the pull-rotation mechanism further comprises a piston (130) slidable within the outer tubular strut (10) and fastened to the inner tubular strut (20) by fastening means (23), wherein the piston (130) comprises the locking groove (132).

7. Collapsible strut construction (1), according to claim 6, wherein the piston (130) further comprises a friction groove (136) housing a friction abutment (160) configured to scrape the inner surface of the outer tubular strut (10).

8. Collapsible strut construction (1), according to any one of claims 6 and 7, wherein the piston (130) further comprises a longitudinal bore (134).

9. Collapsible strut construction (1), according to any one of claims 6-8, wherein the piston (130) further comprises an anti-void cavity (135).

10. Collapsible strut construction (1), according to any one of the preceding claims, wherein the pull-rotation mechanism further comprises a tubular end fitting (170) slidable around the inner tubular strut (20); the tubular end fitting (170) further comprising a head portion (171) of reduced outer diameter and an end abutment (172) fastened to the outer tubular strut (10) by fastening means (17), such that the head portion (171) is positioned farther within the outer tubular strut (10) than the end abutment (172); and wherein the elastic means (140) surround the head portion (171) of the tubular end fitting (170).

11. Collapsible strut construction (1), according to claim 10, wherein the proximal end of the elastic means (140) is coupled to the end abutment (172) of the tubular end fitting (170).

12. Collapsible strut construction (1), according to any one of the preceding claims, wherein the distal end of the outer tubular strut (10) comprises one of a fastener (12) or a detachable fastener (21).

13. Collapsible strut construction (1), according to any one of the preceding claims, wherein the distal end of the inner tubular strut (20) comprises one of the fastener (12) or the detachable fastener (21).

## Patentansprüche

1. Zusammenklappbare Strebenkonstruktion (1), die manuell zwischen einer ausgefahrenen, verriegelten Position und einer zurückgezogenen, entriegelten Position bewegbar ist, mit:
einer äußeren rohrförmigen Strebe (10);
einer inneren rohrförmigen Strebe (20), die in der äußeren rohrförmigen Strebe (10) gleitend verschiebbar ist; und
einem Zug-Dreh-Mechanismus, der dazu ausgebildet ist, die äußere rohrförmige Strebe (10) und die innere rohrförmige Strebe (20) unter Last in der ausgefahrenen Position miteinander zu verriegeln und zu entriegeln, wobei der Zug-Dreh-Mechanismus ferner mehrere Verriegelungsmitnehmer (120), eine Verriegelungsnut (132), die dazu ausgebildet ist, die mehreren Verriegelungsmitnehmer (120) in der ausgefahrenen, verriegelten Position aufzunehmen, und eine elastische Einrichtung (140) aufweist;
wobei der Zug-Dreh-Mechanismus ferner einen Verriegelungskragen (110) aufweist, der in der äußeren rohrförmigen Strebe (10) verschiebbar und um die innere rohrförmige Strebe (20) drehbar ist;
wobei der Verriegelungskragen (110) und die elastische Einrichtung (140) dazu ausgebildet sind, die mehreren Verriegelungsmitnehmer (120) in die Verriegelungsnut (132) vorzuspannen;
**dadurch gekennzeichnet, dass**
der Verriegelungskragen (110) ferner ein gekerbtes Ende (112) mit mehreren Ausschnitten aufweist; und
in der ausgefahrenen, entriegelten Position die elastische Einrichtung (140) zusammengedrückt ist und die Ausschnitte in dem gekerbten Ende (112) auf jeden der Verriegelungsmitnehmer (120) ausgerichtet sind.

2. Zusammenklappbare Strebenkonstruktion (1), nach einem der vorhergehenden Ansprüche, ferner mit einem Entriegelungskragen (30), der verschiebbar und um die äußere rohrförmige Strebe (10) drehbar ist, und der mit dem Zug-Dreh-Mechanismus mittels mehrerer Stifte (113) verbunden ist, welche in dem Verriegelungskragen (110) vorgesehen sind, wobei die Stifte (113) von dem Verriegelungskragen (110) nach außen ragen und jeder Stift (113) eine von mehreren Ausnehmungen in dem äußeren rohrförmigen Element (10) durchquert.

3. Zusammenklappbare Strebenkonstruktion (1) nach Anspruch 2, bei welcher die mehreren in dem äußeren rohrförmigen Element (10) Ausnehmungen flunkenförmige Schlitze (11) sind, und wobei jeder der mehreren flunkenförmigen Schlitze (11) dazu ausgebildet ist, einen der mehreren Stifte (113) aus der ausgefahrenen, verriegelten Position zu der ausgefahrenen, entriegelten Position zu führen, und umgekehrt.

4. Zusammenklappbare Strebenkonstruktion (1), nach einem der vorhergehenden Ansprüche, bei welcher der Zug-Dreh-Mechanismus ferner einen rohrförmigen Käfig (150) aufweist, der durch Befestigungsmittel (15) an der äußeren rohrförmigen Strebe (10) befestigt ist, wobei der rohrförmige Käfig (150) ferner mehrere Führungsschlitze (152) aufweist, wobei jeder der mehreren Führungsschlitze (152) dazu ausgebildet ist, einen der mehreren Verriegelungsmitnehmer (120) in die und aus der Verriegelungsnut (132) zu führen.

5. Zusammenklappbare Strebenkonstruktion (1) nach Anspruch 4, bei welcher der rohrförmige Käfig (150) ferner einen Kopfbereich (151) mit verringertem Außendurchmesser und einen Endanschlag (153) aufweist, der durch Befestigungsmittel (15) an der äußeren rohrförmigen Strebe (10) derart befestigt ist, dass der Endanschlag (153) weiter innerhalb der äußeren rohrförmigen Strebe (10) angeordnet ist als der Kopfbereich (151); wobei die mehreren Führungsschlitze (152) in dem Kopfbereich (151) angeordnet sind; und wobei das gekerbte Ende (112) des Verriegelungskragens (110) um den Kopfbereich (151) des rohrförmigen Käfigs (150) gleitend verschiebbar ist.

6. Zusammenklappbare Strebenkonstruktion (1) nach einem der vorhergehenden Ansprüche, bei welcher der Zug-Dreh-Mechanismus ferner einen Kolben (130) aufweist, der in der äußeren rohrförmigen Strebe (10) gleitend verschiebbar ist und an der inneren rohrförmigen Strebe (20) durch Befestigungsmittel (22) befestigt ist, wobei der Kolben (130) die Verriegelungsnut (132) aufweist.

7. Zusammenklappbare Strebenkonstruktion (1) nach Anspruch 6, bei welcher der Kolben (130) ferner eine Reibungsnut (136) aufweist, welche einen Friktionsanschlag (160) aufnimmt, der zum Schaben an der Innenfläche der äußeren rohrförmigen Strebe (10) ausgebildet ist.

8. Zusammenklappbare Strebenkonstruktion (1) nach einem der Ansprüche 6 und 7, bei welcher der Kolben (130) ferner eine Längsbohrung (134) aufweist.

9. Zusammenklappbare Strebenkonstruktion (1) nach einem der Ansprüche 6-8, bei welcher der Kolben (130) ferner einen vakuumbrechenden Hohlraum (135) aufweist.

10. Zusammenklappbare Strebenkonstruktion (1) nach einem der vorhergehenden Ansprüche, bei welcher der Zug-Dreh-Mechanismus ferner ein rohrförmiges Endfitting (170) aufweist, das um die innere rohrförmige Strebe (20) verschiebbar ist; wobei das rohrförmige Endfitting (170) ferner einen Kopfbereich (171) mit verringertem Außendurchmesser und einen Endanschlag (172) aufweist, der durch Befestigungsmittel (17) an der äußeren rohrförmigen Strebe (10) derart befestigt ist, dass der Kopfbereich (171) weiter innerhalb der äußeren rohrförmigen Strebe (10) angeordnet ist als der Endanschlag (172); und wobei die elastische Einrichtung (140) den Kopfbereich (171) des rohrförmigen Endfittings (170) umgibt.

11. Zusammenklappbare Strebenkonstruktion (1) nach Anspruch 10, bei welcher das proximale Ende der elastischen Einrichtung (142) mit dem Endanschlag (172) des rohrförmigen Endfittings (170) verbunden ist.

12. Zusammenklappbare Strebenkonstruktion (1) nach einem der vorhergehenden Ansprüche, bei welcher das distale Ende der äußeren rohrförmigen Strebe (10) entweder eine Befestigungsvorrichtung (12) oder eine lösbare Befestigungsvorrichtung (21) aufweist.

13. Zusammenklappbare Strebenkonstruktion (1) nach einem der vorhergehenden Ansprüche, bei welcher das distale Ende der inneren rohrförmigen Strebe (20) entweder eine Befestigungsvorrichtung (12) oder eine lösbare Befestigungsvorrichtung (21) aufweist.

## Revendications

1. Construction d'entretoise rétractable (1), mobile manuellement entre une position verrouillée, étendue et une position déverrouillée, rétractée, comprenant :
une entretoise tubulaire externe (10) ;
une entretoise tubulaire interne (20) pouvant coulisser à l'intérieur de l'entretoise tubulaire externe (10) ; et
un mécanisme de rotation-traction configuré pour verrouiller et déverrouiller sous une charge l'entretoise tubulaire externe (10) et l'entretoise tubulaire interne (20) ensemble dans la position étendue, le mécanisme de rotation-traction comprenant en outre une pluralité de leviers de verrouillage (120), une rainure de verrouillage (132) configurée pour loger la pluralité de leviers de verrouillage (120) dans la position verrouillée, étendue et des moyens élastiques (140) ;
le mécanisme de rotation-traction comprenant en outre un collier de verrouillage (110) pouvant coulisser et tourner à l'intérieur de l'entretoise tubulaire externe (10) et autour de l'entretoise tubulaire interne (20) ;
le collier de verrouillage (110) et les moyens élastiques (140) étant configurés pour solliciter de manière coopérante la pluralité de leviers de verrouillage (120) dans la rainure de verrouillage (132) ;
**caractérisé en ce que**
le collier de verrouillage (110) comprend en outre une extrémité de créneau (112) ayant une pluralité de découpes ; et
les moyens élastiques (140) sont comprimés et les découpes de l'extrémité de créneau (112) sont alignées avec chacun des leviers de verrouillage (120) dans la position déverrouillée, étendue.

2. Construction d'entretoise rétractable (1), selon l'une quelconque des revendications précédentes, comprenant en outre un collier de déverrouillage (30) pouvant coulisser et tourner autour de l'entretoise tubulaire externe (10) et couplé au mécanisme de rotation-traction au moyen d'une pluralité de broches (113) comprises dans le collier de verrouillage (110), les broches (113) faisant saillie vers l'extérieur du collier de verrouillage (110) et chaque broche (113) traversant l'un d'une pluralité d'évidements compris dans l'élément tubulaire externe (10) .

3. Construction d'entretoise rétractable (1), selon la revendication 2, dans laquelle la pluralité d'évidements compris dans l'élément tubulaire externe (10) sont des fentes en forme de coulisseau (11), et dans laquelle chacune de la pluralité de fentes en forme de coulisseau (11) est configurée pour guider l'une de la pluralité de broches (113) de la position verrouillée, étendue à la position déverrouillée, étendue et vice versa.

4. Construction d'entretoise rétractable (1), selon l'une quelconque des revendications précédentes, dans laquelle le mécanisme de rotation-traction comprend en outre une cage tubulaire (150) fixée à l'entretoise tubulaire externe (10) par des moyens de fixation (15), la cage tubulaire (150) comprenant en outre une pluralité de fentes de guidage (152), dans laquelle chacune de la pluralité de fentes de guidage (152) est configurée pour guider l'un de la pluralité de leviers de verrouillage (120) dans et hors de la rainure de verrouillage (132).

5. Construction d'entretoise rétractable (1), selon la revendication 4, dans laquelle la cage tubulaire (150) comprend en outre une partie de tête (151) de diamètre extérieur réduit et une butée d'extrémité (153) fixée à l'entretoise tubulaire externe (10) par des moyens de fixation (15), de sorte que la butée d'extrémité (153) est positionnée plus loin à l'intérieur de l'entretoise tubulaire externe (10) que la partie de tête (151) ; la pluralité de fentes de guidage (152) est située dans la partie de tête (151) ; et dans laquelle l'extrémité de créneau (112) du collier de verrouillage (110) peut coulisser autour de la partie de tête (151) de la cage tubulaire (150).

6. Construction d'entretoise rétractable (1), selon l'une quelconque des revendications précédentes, dans laquelle le mécanisme de rotation-traction comprend en outre un piston (130) pouvant coulisser à l'intérieur de l'entretoise tubulaire externe (10) et fixé à l'entretoise tubulaire interne (20) par des moyens de fixation (23), dans laquelle le piston (130) comprend la rainure de verrouillage (132).

7. Construction d'entretoise rétractable (1), selon la revendication 6, dans laquelle le piston (130) comprend en outre une rainure de friction (136) logeant une butée de friction (160) configurée pour frotter la surface interne de l'entretoise tubulaire externe (10).

8. Construction d'entretoise rétractable (1), selon l'une quelconque des revendications 6 et 7, dans laquelle le piston (130) comprend en outre un alésage longitudinal (134).

9. Construction d'entretoise rétractable (1), selon l'une quelconque des revendications 6 à 8, dans laquelle le piston (130) comprend en outre une cavité anti-vide (135).

10. Construction d'entretoise rétractable (1), selon l'une quelconque des revendications précédentes, dans laquelle le mécanisme de rotation-traction comprend en outre un raccord d'extrémité tubulaire (170) pouvant coulisser autour de l'entretoise tubulaire interne (20) ; le raccord d'extrémité tubulaire (170) comprenant en outre une partie de tête (171) de diamètre extérieur réduit et une butée d'extrémité (172) fixée à l'entretoise tubulaire externe (10) par des moyens de fixation (17), de sorte que la partie de tête (171) est positionnée plus loin à l'intérieur de l'entretoise tubulaire externe (10) que la butée d'extrémité (172) ; et dans laquelle les moyens élastiques (140) entourent la partie de tête (171) du raccord d'extrémité tubulaire (170).

11. Construction d'entretoise rétractable (1), selon la revendication 10, dans laquelle l'extrémité proximale des moyens élastiques (140) est couplée à la butée d'extrémité (172) du raccord d'extrémité tubulaire (170).

12. Construction d'entretoise rétractable (1), selon l'une quelconque des revendications précédentes, dans laquelle l'extrémité distale de l'entretoise tubulaire externe (10) comprend l'un d'un élément de fixation (12) ou d'un élément de fixation détachable (21).

13. Construction d'entretoise rétractable (1), selon l'une quelconque des revendications précédentes, dans laquelle l'extrémité distale de l'entretoise tubulaire interne (20) comprend l'un de l'élément de fixation (12) ou de l'élément de fixation détachable (21).
